# EUROPEAN PATENT APPLICATION

(11) **EP 1 990 390 A1**
(43) Date of publication of application: **12.11.2008**
(21) Application number: 07714785.8
(22) Date of filing: 22.02.2007
(51) Int. Cl.: C09J 7/02, C09J 4/06, C09J 109/00, C09J 133/04, C09J 163/10, C09J 167/07, C09J 171/00, C09J 175/16, C09J 183/04

(54) **PROTECTIVE SHEET FOR COATING FILM**

(30) Priority: 28.02.2006 JP 2006053911
(71) Applicant: Lintec Corporation, Tokyo 173-0001 (JP)
(72) Inventor: TANAKA, Atsuhiro, Tokyo 1730001 (JP)
(74) Representative: Gille Hrabal Struck Neidlein Prop Roos
(86) International application number: PCT/JP2007/053287
(87) International publication number: WO 2007/099851

(57) **Abstract**

Provided is a protective sheet for a coating layer comprising a substrate sheet having a pressure-sensitive adhesive layer, wherein the pressure-sensitive adhesive layer is obtained by cross-linking of a layer through irradiating with an active energy beam, and the layer comprises a composition containing a component (A) an acrylic-based homopolymer or copolymer containing at least one selected from butyl(meth)acrylate, 2-ethylhexyl(meth)acrylate and isooctyl(meth)acrylate as a monomer component and containing no active hydrogens and a component (B) a multifunctional (meth)acrylate monomer or oligomer.

## Description

### TECHNICAL FIELD

The present invention relates to a protective sheet for a coating layer, more specifically to a protective sheet for a urethane-based coating layer for automobiles which does not allow coating layers applied on automotive bodies and parts of automobiles to change in quality or color and which is excellent in a stripping property after superposed for a long period of time.
The protective sheet for a coating layer according to the present invention is a protective sheet capable of being applied as well to a coating layer of a urethane-based coating material in which a small amount of a solvent remains due to insufficient drying and which is insufficiently cured after drying, and it is particularly useful as a protective sheet for coated plastic-made parts such as bumpers and the like.

### BACKGROUND ART

When transporting automobiles, brought about are the inconveniences that the coating layers of automotive bodies and parts become lusterless, discolored and damaged due to suspended matters such as dirts and dusts, rain, grass pollen and the like, colliding matters such as sands and the like and contact by workers. In order to prevent such inconveniences, wax base materials are applied on the coating layers of automotive bodies and parts of automobiles, or protective sheets are superposed thereon.
However, in heating and curing coating layers applied on automotive bodies and parts, the curing reaction of the coating layers does not sufficiently proceed in a certain case even after passing through a drying furnace.
Among them, in the case of a bumper which is one of parts for automobiles, synthetic resin-made bumpers have come to be used in place of conventional metal-made ones in order to reduce a weight thereof, and the above synthetic resin-made bumpers are usually coated in order to improve its appearance. In the case of the above synthetic resin-made bumpers, protective sheets are superposed thereon as well in order to prevent the inconveniences described above.
However, in heating and curing coating layers applied on synthetic resin-made bumpers, the curing temperature can not be elevated in order to avoid adverse affections such as deterioration and deformation of the resins. Accordingly, the coating layers on the coated synthetic resin-made bumpers are insufficiently dried even after passing through a drying furnace, and therefore a small amount of the solvent remains or the curing reaction does not sufficiently proceed in a certain case.
When adhering a protective sheet on a coating layer in such state, brought about are problems such as "stepping (the phenomenon that deformations brought about by fine wrinkles and lifting produced on the sheet in adhering the protective sheet are transferred onto the coating layer, whereby the coating layer is deformed)", "whitening (the phenomenon that deviation is caused in the composition of the coating layer due to affinity thereof with a pressure-sensitive adhesive layer of the sheet and that the coating layer looks white when stripping the sheet)" and "adhesive deposit (the phenomenon that the pressure-sensitive adhesive layer is partially transferred onto the coating layer when stripping the sheet)".

Proposed as a protective sheet for a coating layer are a sheet prepared by providing a layer of a polyisobutylene-based pressure-sensitive adhesive on a substrate for supporting (for example, a Patent Document 1), a sheet prepared by providing a layer of a pressure-sensitive adhesive comprising butyl rubber or styrene-ethylene-butylene-styrene block copolymer on a substrate for supporting (for example, a Patent Document 2), a sheet prepared by providing a layer of a composition obtained by mixing a polyisobutylene-based pressure-sensitive adhesive with a small amount of an acrylic-based pressure-sensitive adhesive on a substrate for supporting (for example, a Patent Document 3), a sheet prepared by providing a layer of a composition obtained by blending an acrylic-based pressure-sensitive adhesive with a multifunctional isocyanate compound on a substrate for supporting (for example, a Patent Document 4), a sheet prepared by providing an ethylene-vinyl acetate-glycidyl methacrylate copolymer on a substrate for supporting (for example, a Patent Document 5) and a sheet prepared by providing a pressure-sensitive adhesive layer obtained by photo-curing a resin comprising a principal component of an ionomer obtained by subjecting an ethylene-methacrylic acid copolymer to intermolecular bonding with metal ions on a substrate for supporting (for example, a Patent Document 6).
Further, proposed is a sheet prepared by providing a pressure-sensitive adhesive layer obtained by cross-linking a resin composition comprising urethane (meth)acrylate having a hydrogenated polybutadiene skeleton and alkyl(meth)acrylate having 6 or more carbon atoms with an active energy beam on a substrate for supporting (for example, a Patent Document 7).
However, the performances of the protective sheets for a urethane-based coating layer which have the pressure-sensitive adhesive layers described above are not still satisfactory.
Patent Document 1: Patent No. 2701020
Patent Document 2: Patent No. 3668322
Patent Document 3: Patent No. 2832565
Patent Document 4: Patent No. 3342977
Patent Document 5: JP 1998-121002A
Patent Document 6: JP 1998-121010A
Patent Document 7: JP 2002-309185A

### DISCLOSURE OF THE INVENTION

In light of the situation described above, an object of the present invention is to solve the problems described above in a protective sheet for a coating layer by using a pressure-sensitive adhesive comprising an acrylic-based resin component having a pressure-sensitive adhesive property which is developed by cross-linking.

Intensive researches repeated by the present inventor have resulted in finding that the above object can be achieved by using a protective sheet prepared by providing on a substrate sheet, a pressure-sensitive adhesive layer having a pressure-sensitive adhesive property which is developed by blending an acrylic-based homopolymer or copolymer having no active hydrogens with a multifunctional (meth)acrylate monomer or oligomer having a cross-linkable property and then cross-linking the multifunctional (meth)acrylate monomer or oligomer, and thus the present inventor has completed the present invention.

That is, the present invention provides the following items (1) to (8):
(1) A protective sheet for a coating layer comprising a substrate sheet having a pressure-sensitive adhesive layer, wherein the pressure-sensitive adhesive layer is obtained by cross-linking of a layer through irradiating with an active energy beam, and the layer comprises a composition containing a component (A) an acrylic-based homopolymer or copolymer containing at least one selected from butyl(meth)acrylate, 2-ethylhexyl(meth)acrylate and isooctyl(meth)acrylate as a monomer component and containing no active hydrogens and a component (B) a multifunctional (meth)acrylate monomer or oligomer,
(2) The protective sheet as described in the above item (1), wherein the multifunctional (meth)acrylate monomer is a monomer having a molecular weight of less than 1000,
(3) The protective sheet as described in the above item (1), wherein the multifunctional (meth)acrylate oligomer is at least one selected from a urethane(meth)acrylate oligomer, a polyester(meth)acrylate oligomer, an epoxy(meth)acrylate oligomer, a polyether(meth)acrylate oligomer, a polybutadiene(meth)acrylate oligomer and a silicone(meth)acrylate oligomer,
(4) The protective sheet as described in the above item (3), wherein the multifunctional (meth)acrylate oligomer is a urethane(meth)acrylate oligomer,
(5) The protective sheet as described in any one of the above items (1) to (4), wherein the acrylic-based homopolymer or copolymer described above is a homopolymer of butyl acrylate,
(6) The protective sheet as described in any one of the above items (1) to (4), wherein the acrylic-based homopolymer or copolymer described above is a n-butylacrylate-methyl acrylate copolymer,
(7) The protective sheet as described in any one of the above items (1) to (4), wherein it is a protective sheet for a coating layer which is applied on automobiles and
(8) The protective sheet as described in any one of the above items (1) to (4), wherein it is a protective sheet for a urethane-based coating layer which is applied on resin-made bumpers.

According to the present invention, capable of being provided is a protective sheet for a coating layer which is less liable to allow coating layers applied on automotive bodies and parts of automobiles to change in quality or color and which is excellent in a stripping property after superposed for a long period of time. In particular, it is useful as a protective sheet for coating layers in which a small amount of a solvent remains due to insufficient drying because of immediately after drying in plastic-made parts such as coated bumpers and the like and in which an isocyanate group and the like remain in the coating layers due to insufficient curing.

### BEST MODE FOR CARRYING OUT THE INVENTION

A pressure-sensitive adhesive layer containing an acrylic-based resin component which is provided on the protective sheet for a coating layer according to the present invention is explained.
A pressure-sensitive adhesive constituting the pressure-sensitive adhesive layer in the present invention comprises a composition containing an acrylic-based homopolymer or copolymer [hereinafter referred to as the acrylic-based (co)polymer] having no active hydrogens as a component (A) and a multifunctional (meth)acrylate monomer or oligomer having a cross-linkable property as a component (B), and it comprises a resin obtained by cross-linking of the above pressure-sensitive adhesive layer through irradiating with an active energy beam.
Among them, the acrylic-based (co)polymer having no active hydrogens contains at least one selected from butyl(meth)acrylate, 2-ethylhexyl(meth)acrylate and isooctyl(meth)acrylate as a monomer component, and it is obtained by radically (co)polymerizing, if necessary, with other polymerizable monomers having no active hydrogens. Either of n- or isobutyl(meth)acrylate can be used for butyl(meth)acrylate.
The other polymerizable monomers having no active hydrogens include (meth)acrylates in which an alkyl group at an ester part has 1 to 20 carbon atoms, and they include, to be specific, (meth)acrylates having aliphatic groups such as methyl(meth)acrylate, ethyl(meth)acrylate, propyl(meth)acrylate, pentyl(meth)acrylate, hexyl(meth)acrylate, decyl(meth)acrylate, isodecyl(meth)acrylate, dodecyl(meth)acrylate, myristyl(meth)acrylate, lauryl(meth)acrylate, butoxyethyl(meth)acrylate, palmityl(meth)acrylate, stearyl(meth)acrylate and the like, (meth)acrylates having aromatic groups such as benzyl(meth)acrylate and the like, (meth)acrylates having alicyclic groups such as cyclohexyl(meth)acrylate and the like, acrylonitrile and vinyl esters such as vinyl acetate, vinyl butyrate and the like.
In the present invention, polymerizable monomers having active hydrogens such as hydroxyalkyl(meth)acrylates and (meth)acrylic acid which are used in conventional acrylic-based pressure-sensitive adhesives are not used. In addition thereto, the examples of the polymerizable monomers having active hydrogens which are not used in the present invention include monomers having a hydroxyl group other than hydroxyalkyl(meth)acrylates, monomers having a carboxyl group other than (meth)acrylic acid and monomers having a functional group such as an amino group, a substituted amino group and the like. Because of the presence of active hydrogens in the pressure-sensitive adhesives prepared by using the above polymerizable monomers, problems such as whitening of coating layers are brought about in a certain case when the protective sheet is superposed on coating layers assuming that satisfactory drying is carried out and allows no solvent to remain and that curing goes on sufficiently. This is considered to be attributable to the fact that the active hydrogens present in the pressure-sensitive adhesives have affinity with the coating layers.
When curing of a urethane coating layer does not proceed sufficiently, the active hydrogens described above react with a small amount of an isocyanate group remaining in the urethane coating layer which is not sufficiently cured, and therefore severer problems are brought about on the coating layer.

A copolymerization mole ratio of at least one of the three monomer components described above such as butyl(meth)acrylate and the like to the other polymerizable monomers having no active hydrogens is 1/0 to 1/1, preferably 1/0 to 1/0.2 in terms of the former/the latter. The copolymerization mole ratio falling in the range described above makes it possible to maintain a glass transition temperature of the acrylic-based (co)polymer obtained in a suitable range and minimize effects exerted on the urethane-based coating layer, and therefore adverse affections are not exerted on a coating layer on which the protective sheet is superposed.

A conventional radical polymerization method which has so far been carried out can be applied to the production of the acrylic-based (co)polymer.
For example, the monomers described above are dissolved in a hydrocarbon base organic solvent such as toluene and xylene having no active hydrogens and an ester-based organic solvent such as ethyl acetate, and the solution is mixed with a polymerization initiator such as azobisisobutyronitrile, azobisisovaleronitrile and benzoyl peroxide and heated at about 50 to 90°C for about 3 to 20 hours in a refluxing state, whereby an organic solvent solution of an acrylic-based (co)polymer is obtained.
Bulk polymerization may be carried out using only the polymerizable monomer and the polymerization initiator without using the organic solvent. When the acrylic-based (co)polymer is obtained in the form of an organic solvent solution, it may be blended as it is with a multifunctional (meth)acrylate monomer or oligomer described later, or it may be blended after removing a part or a whole amount of the organic solvent solution.
The acrylic-based (co)polymer in the present invention shall not specifically be restricted in a copolymerization form, and it may be any one of random, block and graft copolymers.
The acrylic-based (co)polymer has a weight average molecular weight of usually 200,000 or more, preferably 400,000 to 2,000,000 and more preferably 500,000 to 1,000,000. The weight average molecular weight controlled to the above range makes the close adhesiveness with an adherent and the adhesion durability satisfactory and makes it possible to prevent floating and stripping from being brought about. The acrylic-based (co)polymer has a glass transition temperature of usually -10°C or lower, preferably -70 to -20°C.
The weight average molecular weight in the present invention is a value based on a polystyrene standard measured by a gel permeation chromatography (GPC) method.

Hereinafter, the multifunctional (meth)acrylate monomer or oligomer which is the other component (B) constituting the pressure-sensitive adhesive layer in the protective sheet for a coating layer according to the present invention shall be explained.
The above multifunctional (meth)acrylate monomer or oligomer has two or more (meth)acryloyl groups at terminals and can be cross-linked by irradiation with an active energy beam, and a pressure-sensitive adhesive property is developed by cross-linking.

The multifunctional (meth)acrylate monomer has preferably a molecular weight of less than 1000, and the specific examples thereof include, for example, bifunctional type (meth)acrylate monomers such as 1,4-butanediol di(meth)acrylate, 1,6-hexanediol di(meth)acrylate, neopentylglycol di(meth)acrylate, polyethyleneglycol di(meth)acrylate, neopentylglycol adipate di(meth)acrylate, hydroxypivalic acid neopentylglycol di(meth)acrylate, dicyclopentanyl di(meth)acrylate, a caprolactone-modified dicyclopentenyl di(meth)acrylate, an ethylene oxide-modified phosphoric acid di(meth)acrylate, di(acryloxyethyl) isocyanurate and allylated cyclohexyl di(meth)acrylate; trifunctional type (meth)acrylate monomers such as trimethylolpropane tri(meth)acrylate, dipentaerythritol tri(meth)acrylate, propionic acid-modified dipentaerythritol tri(meth)acrylate, pentaerythritol tri(meth)acrylate, a propylene oxide-modified trimethylolpropane tri(meth)acrylate and tris(acryloxyethyl) isocyanurate; tetrafunctional type (meth)acrylate monomers such as diglycerin tetra(meth)acrylate and pentaerythritol tetra(meth)acrylate; pentafunctional type (meth)acrylate monomers such as a propionic acid-modified dipentaerythritol penta(meth)acrylate; and hexafunctional type (meth)acrylate monomers such as dipentaerythritol hexa(meth)acrylate and a caprolactone-modified dipentaerythritol hexa(meth)acrylate.
In the present invention, the above multifunctional (meth)acrylate monomers may be used alone or in combination of two or more kinds thereof.

The multifunctional (meth)acrylate oligomer having a cross-linkable property can also be used as the component (B).
The above multifunctional (meth)acrylate oligomer has a weight average molecular weight of usually 1,000 to 50,000, preferably 1,000 to 30,000 and more preferably 3,000 to 10,000 in terms of a value reduced to standard polymethyl methacrylate measured by a GPC method.
The examples of the above multifunctional (meth)acrylate oligomer include oligomers of a urethane(meth)acrylate base, a polyester(meth)acrylate base, an epoxy(meth)acrylate base, a polyether(meth)acrylate base, a polybutadiene(meth)acrylate base and a silicone(meth)acrylate base.
In the present invention, the above multifunctional (meth)acrylate oligomers may be used alone or in combination of two or more kinds thereof.

The urethane(meth)acrylate oligomer can be obtained, for example, by reacting polyetherpolyol or polyesterpolyol with polyisocyanate to obtain a polyurethane oligomer and esterifying it with (meth)acrylic acid. The oligomer of a polyester(meth)acrylate base can be obtained, for example, by condensing polyvalent carboxylic acid with polyhydric alcohol to obtain a polyester oligomer having hydroxyl groups at both terminals and esterifying the hydroxyl groups thereof with (meth)acrylic acid or by adding alkylene oxide to polyvalent carboxylic acid to obtain an oligomer and esterifying a hydroxyl group at terminals thereof with (meth)acrylic acid.
The oligomer of an epoxy(meth)acrylate base can be obtained, for example, by reacting an oxirane ring of a bisphenol A type epoxy resin or a novolak type epoxy resin having a relatively low molecular weight with (meth)acrylic acid and esterifying it. Further, an epoxy acrylate oligomer of a carboxyl-modified type obtained by partially modifying the above epoxy(meth)acrylate base oligomer with dibasic carboxylic anhydride can be used as well. The polyether(meth)acrylate base oligomer can be obtained by esterifying a hydroxyl group of polyetherpolyol with (meth)acrylic acid.
The polybutadiene(meth)acrylate oligomer is a resin obtained by esterifying liquid polybutadiene having two or more reactive hydroxyl groups at terminals with (meth)acrylic acid or by first adding diisocyanate to the hydroxyl groups at terminals and converting them to (meth)acrylates by hydroxy(meth)acrylate. Further, a resin obtained from hydrogenated liquid polybutadiene can be used as well.
The oligomer of a silicone(meth)acrylate base can be obtained by esterifying an organosilicon compound having two or more hydroxyl groups at terminals with (meth)acrylic acid or by first adding diisocyanate to the hydroxyl groups at terminals and converting them to (meth)acrylates by hydroxy(meth)acrylate.
Among the various multifunctional (meth)acrylate oligomers, the oligomer of a urethane(meth)acrylate base is suitably used from the viewpoint of obtaining a stress relaxing property and a cohesion of the pressure-sensitive adhesive layer.

The urethane(meth)acrylate oligomer which is the preferred multifunctional (meth)acrylate oligomer can be obtained, for example, by reacting polyetherpolyol or polyesterpolyol with polyisocyanate to obtain a polyurethane oligomer and esterifying it with (meth)acrylic acid.
The above urethane(meth)acrylate oligomer can be prepared by two stage reactions of the following two patterns.

The two stage reaction of the first pattern is carried out in the following manner.
First, a diisocyanate compound is reacted with diol to synthesize a urethane prepolymer having each one isocyanate group at terminals. Then, the urethane prepolymer is reacted with hydroxyalkyl(meth)acrylate or (meth)acrylate monools of various polyols to convert each one isocyanate group present at terminals to a (meth)acryloyl group, whereby a urethane(meth)acrylate oligomer having each one (meth)acryloyl group at both terminals is obtained.

The two stage reaction of the second pattern is carried out in the following manner.
First, a diisocyanate compound is reacted with hydroxyalkyl (meth) acrylate or (meth)acrylate monools of various polyols to synthesize isocyanate group-containing (meth)acrylate having an isocyanate group at one terminal and a (meth)acryloyl group at the other terminal. Then, the isocyanate group-containing (meth)acrylate is reacted with diol, whereby a urethane(meth)acrylate oligomer having each one (meth)acryloyl group at both terminals is obtained.

Both of the two stage reactions of the both patterns described above are reactions of a hydroxyl group with an isocyanate group, and they are continued to be carried out in a temperature range of usually 10 to 100°C, preferably 30 to 90°C for about 1 to 5 hours in the presence of an organic solvent which is inert to an isocyanate group, that is, a solvent of a hydrocarbon base or an ester base using a conventional urethane catalyst such as dibutyltin dilaurate and dibutyltin diethylhexanoate.
An amount to be used of the urethane catalyst is usually 50 to 1000 ppm, preferably 50 to 500 ppm based on the total mass of the raw materials used for the reaction, but an amount to be used of the urethane catalyst is preferably smaller from the viewpoint of reducing an effect exerted on a coating layer after adhering the protective sheet of the present invention the coating layer and stripping it therefrom.
In the reaction in the presence of (meth)acrylate, it is carried out preferably in the presence of air or oxygen for the purpose of preventing polymerization of a (meth)acryloyl group. A polymerization inhibitor which is usually used such as hydroquinone and hydroquinone monomethyl ether may be added to carry out the reaction.
The two stage reaction of the first pattern in which heating of hydroxyalkyl(meth)acrylate is carried out only once is preferred from the viewpoint of preventing polymerization of hydroxyalkyl(meth)acrylate to the utmost.

The diols include various glycols having a relatively low molecular weight such as 1,3-butylene glycol, 1,4-butyleneglycol, 1,6-hexanediol, neopentylglycol, ethyleneglycol, diethyleneglycol, propyleneglycol and dipropyleneglycol, polyesterdiols such as lactonediol and polyetherdiols such as polytetramethyleneglycol. The above diols may be used in the form of a mixture of two or more kinds thereof.

Tri- or higher functional polyols such as trimethylolpropane and pentaerythritol may be added to the diols described above. When adding the tri- or higher functional polyols, a part of the urethane(meth)acrylate in the present invention results in having three or more (meth)acryloyl groups in total at terminals, and when cross-linked by irradiation with an active energy beam, a cross-linking density in the pressure-sensitive adhesive, that is, the pressure-sensitive adhesive property can be controlled.

When the tri- or higher functional polyol is added to diol to prepare the urethane(meth)acrylate oligomer in the present invention, a mole ratio of the respective components has to be severely controlled in the two stage reactions of the two patterns described above. Severe controlling of the mole ratio makes it possible to reduce an amount of active hydrogens present in the urethane(meth)acrylate oligomer obtained to the utmost.
An oligomer which does not contain active hydrogens such as a hydroxyl group as is the case with the acrylic-based (co)polymer containing no active hydrogens or an oligomer which is reduced in an amount of active hydrogens to the utmost is preferably used for the urethane(meth)acrylate oligomer in the present invention.

The diisocyanate compound includes tolylenediisocyanate, hydrogenated tolylenediisocyanate, hexamethylenediisocyanate, trimethylhexamethylenediisocyanate, xylylenediisocyanate, diphenylmethanediisocyanate, parphenylenediisocyanate, naphthalenediisocyanate, isophoronediisocyanate and the like. Among, the above diisocyanate compounds, hexamethylenediisocyanate is preferably used from the viewpoint of easiness in availability. The above diisocyanate compounds may be used in the form of a mixture of two or more kinds thereof.

The hydroxyalkyl(meth)acrylate includes hydroxymethyl(meth)acrylate, hydroxyethyl(meth)acrylate, hydroxypropyl(meth)acrylate, hydroxybutyl(meth)acrylate and the like. The above hydroxyalkyl(meth)acrylates may be used in the form of a mixture of two or more kinds thereof.

The (meth)acrylate monool includes ethylene glycol mono(meth)acrylate, propylene glycol mono(meth)acrylate, tetramethylene glycol mono(meth)acrylate, neopentyl glycol mono(meth)acrylate, trimethylolpropane di(meth)acrylate, pentaerythritol tri(meth)acrylate and the like. The above (meth)acrylates may be used in the form of a mixture of two or more kinds thereof. Among the hydroxyalkyl (meth)acrylates and the (meth)acrylate monools each described above, hydroxyethyl(meth)acrylate is preferably used from the viewpoint of easiness in availability.
Commercial products may be used for the urethane(meth)acrylate oligomer in the present invention.
The commercial urethane (meth) acrylate oligomer includes Shiko UV-1400B, Shiko UV-1700B and Shiko UV-6300B manufactured by Nippon Synthetic Chemical Industry Co., Ltd., BEAMSET 575 manufactured by Arakawa Chemical Industries Ltd. and the like.

A blending ratio of the acrylic-based (co)polymer which is the component (A) in the present invention to the multifunctional (meth)acrylate monomer or oligomer which is the component (B) is usually 0.1 to 200 parts by mass, preferably 0.5 to 100 parts by mass and more preferably 1 to 50 parts by mass for the latter per 100 parts by mass for the former. A blending ratio of the former/the latter which is controlled to the range described above makes it possible to provide the pressure-sensitive adhesive layer with a suited pressure-sensitive adhesive property, flexibility and removing property, and therefore the problems described above are not brought about when stripping the protective sheet from the coating layer.

In addition to the two components described above, various additives can be added as optional components to the pressure-sensitive adhesive in the present invention as long as characteristics required to the protective sheet for a coating layer are not damaged. The additives include antioxidants, light stabilizers of a benzotriazole base, flame retardants of a phosphoric ester base and others, antistatic agents such as cationic surfactants, inert solvents such as toluene, xylene and ethyl acetate which are used in order to reduce a viscosity when applying the pressure-sensitive adhesive, colorants and fillers.

As described above, in the present invention, after the respective components are blended, the blended matter is applied on a release sheet or a substrate sheet to form a pressure-sensitive adhesive layer, and after it is irradiated with an energy beam and cured, both are stuck together, or a pressure-sensitive adhesive layer is formed on a release sheet or a substrate sheet, and both are stuck together to prepare a laminate, followed by irradiating it with an energy beam and cross-linking to thereby provide the pressure-sensitive adhesive layer with a suited adhesive strength and removing property, whereby the protective sheet for a coating layer according to the present invention is obtained.

Used as the substrate sheet are films comprising polyolefins such as polyethylene and polypropylene, polyesters such as polyethylene terephthalate and polyethylene naphthalate and resins such as polyimide, polyetherimide, polyaramide, polyetherketone, polyether-etherketone, polyphenylene sulfide and poly(4-methylpentene-1), nonwoven fabrics and synthetic papers. Polyethylene films are preferred from the viewpoints of economical efficiency and easiness in handling.

A thickness of the substrate sheet is a little different depending on a material used, and it is usually about 5 to 300 µm, preferably about 10 to 100 µm. In the case of a polyethylene film which is one of the preferred substrate sheets, the thickness is about 10 to 50 µm.

The composition used for preparing the pressure-sensitive adhesive can be applied on the release sheet or the substrate sheet by a gravure coating method, a bar coating method, a spray coating method, a spin coating method, a roll coating method, a die coating method, a knife coating method, an air knife coating method, a hot melt coating method, a curtain coating method and the like which are usually carried out.

A thickness of the pressure-sensitive adhesive layer after drying which is formed on the release sheet or the substrate sheet is usually about 1 to 50 µm, preferably about 5 to 30 µm. Controlling a thickness of the pressure-sensitive adhesive layer to 1 µm or more makes it possible to secure an adhesive strength and a cohesion (holding power) which are required to the protective sheet, and controlling it to 50 µm or less avoids an increase in the cost and prevents the pressure-sensitive adhesive layer from protruding beyond the edges.

The pressure-sensitive adhesive layer is formed on the release sheet or the substrate sheet, or both are stuck together to prepare a laminate, and then it is irradiated with an energy beam and cross-linked, whereby it can be provided with a suited adhesive strength and removing property.

The energy beam means beams having an energy quantum among electromagnetic waves and charged particle beams, that is, an active light such as a UV ray or an electron beam. When cross-linking is carried out by irradiating with an electron beam, a photopolymerization initiator is not required, but when cross-linking is carried out by irradiating with an active light such as a UV ray, a photopolymerization initiator is preferably allowed to be present.
The photopolymerization initiator used when irradiated with a UV ray shall not specifically be restricted, and optional photopolymerization initiators suitably selected from photopolymerization initiators which have so far been conventionally used for UV ray-curing type resins can be used. The photopolymerization initiator includes, for example, benzoins, benzophenones, acetophenones, α-hydroxyketones, α-aminoketones, α-diketones, α-diketone dialkylacetals, anthraquinones, thioxanthones and other compounds.
To be specific, it includes benzoin, benzoin methyl ether, benzoin ethyl ether, benzoin isopropyl ether, benzoin n-butyl ether, benzoin isobutyl ether, acetophenone, dimethylaminoacetophenone, 2,2-dimethoxy-2-phenylacetophenone, 2,2-diethoxy-2-phenylacetophenone, 2-hydroxy-2-methyl-1-phenylpropane-1-one, 1-hydroxycyclohexyl phenyl ketone, 2-methyl-1-[4-(methylthio)phenyl]-2-morpholino-propane-1-one, 4-(2-hydroxyethoxy)phenyl-2-(hydroxy-2-propyl) ketone, benzophenone, p-phenylbenzophenone, 4,4'-diethylaminobenzophenone, dicyclobenzophenone, 2-methylanthraquinone, 2-ethylanthraquinone, 2-tertiary-butylanthraquinone, 2-aminoanthraquinone, 2-methylthioxanthone, 2-ethylthioxanthone, 2-chlorothioxanthone, 2,4-dimethylthioxanthone, 2,4-diethylthioxanthone, benzyl methyl ketal, acetophenone dimethyl ketal, p-dimethylaminobenzoic esters, oligo[2-hydroxy-2-methyl-1-[4-(1-methylvinyl)phenyl]propanone, 2,4,6-trimethylbenzoyl-diphenyl-phosphine oxide and the like.
The above photopolymerization initiators may be used alone or in combination of two or more kinds thereof. An amount to be used thereof is selected in a range of usually 0.01 to 30 parts by mass, preferably 0.05 to 20 parts by mass per 100 parts by mass of the multifunctional (meth)acrylate monomer or oligomer.
The protective sheet for a coating layer having a suited adhesive strength and removing property is obtained by irradiating with an active energy beam for cross-linking.

An accelerating voltage of an electron beam in carrying out cross-linking by irradiating with an electron beam which is one of active energy beams is usually 130 to 300 kV, preferably 150 to 250 kV. Irradiation at an accelerating voltage of 130 kV or more makes it possible to prevent the adhesive strength from being unsatisfactory due to insufficient cross-linking, and irradiation at an accelerating voltage of 300 kV or less makes it possible to prevent the pressure-sensitive adhesive layer and the substrate sheet from being deteriorated or discolored.
A dosage of the electron beam irradiated is preferably 1 to 70 Mrad, more preferably 2 to 20 Mrad. Irradiation at a dosage of 1 Mrad or more makes it possible to prevent the pressure-sensitive adhesive layer and the substrate sheet from being deteriorated or discolored and prevent the pressure-sensitive property from being unsatisfactory due to insufficient cross-linking. Irradiation at a dosage of 70 Mrad or less makes it possible to prevent the cohesion from being reduced by deterioration or discoloration of the pressure-sensitive adhesive layer and prevent the substrate sheet from being deteriorated or shrunk.
A dosage in the case of irradiating with a UV ray is suitably selected. A light quantity thereof is about 100 to 500 mJ/cm², and an illuminance thereof is about 10 to 500 mW/cm².
Irradiation with an active energy beam is preferably carried out under nitrogen atmosphere in order to prevent the reaction from being disturbed by oxygen.

As described above, the stable adhesive strength and the suited removing property are provided by irradiating with an active energy beam for cross-linking.
The substrate sheet is preferably subjected to corona discharge treatment and/or ozone treatment before the substrate sheet is superposed onto the surface of the pressure-sensitive adhesive layer applied on the release sheet or before applying the pressure-sensitive adhesive on the substrate sheet in order to strengthen a close adhesiveness between the pressure-sensitive adhesive layer and the substrate sheet from the viewpoint of preventing the "adhesive deposit" phenomenon that the pressure-sensitive adhesive layer is partially transferred onto the coating layer when stripping the protective sheet for a coating layer according to the present invention from coated surfaces of automotive bodies and parts of automobiles.

Capable of being used as the release sheet are resin films of polyethylene terephthalate, polyethylene, polypropylene and the like which are coated with a releasing agent such as a fluorine-based resin, a silicone-based resin, long chain alkyl group-containing carbamate and the like.
A thickness of the release sheet is a little different depending on the materials used, and it is usually 10 to 250 µm, preferably 20 to 200 µm.

### EXAMPLES

Hereinafter, the present invention is explained in further details with reference to examples, but the present invention shall by no means be restricted thereto.

### Example 1

A polyethylene film (trade name: PE Wadatoumei 50ASKAI4 manufactured by J-Film Corporation) having a thickness of 50 µm which contains an antistatic agent was used as a substrate sheet for the protective sheet, and a polyethylene terephthalate film (SP-PET3801 manufactured by Lintec Corporation) having a thickness of 38 µm which was coated with a silicone-based resin was used as a release sheet. A solution of a composition which was a pressure-sensitive adhesive for forming a pressure-sensitive adhesive layer and a coating liquid were prepared in the following manner.
Used as the a pressure-sensitive adhesive was a composition comprising 100 parts by mass of a butylacrylate homopolymer [the component (A), a weight average molecular weight: 600,000] prepared by the radical polymerization method described above and 5 parts by mass of urethane acrylate [the component (B), trade name: Shiko UV-1400B, weight average molecular weight: less than 5,000, manufactured by Nippon Synthetic Chemical Industry Co., Ltd.]. The above composition was diluted to a concentration of 35% by mass by ethyl acetate to prepare an ethyl acetate solution. Irgacure 184 (an acetophenone-based polymerization initiator, manufactured by Ciba Specialty Chemicals K. K.) 3.5 parts by mass as an initiator was added to the above solution, and then ethyl acetate was added thereto to dilute the solution to a solid matter concentration of 30% by mass, whereby a coating liquid was prepared.
The coating liquid having a solid matter concentration of 30% by mass described above was applied on a silicone base resin-coated surface of the release sheet described above by a knife coating method so that a thickness after drying was 20 µm, and then it was dried at 90°C for 3 minutes to form a layer which was a pressure-sensitive adhesive layer on the release sheet. Subsequently, the release sheet was stuck together with the substrate sheet described above, and then the release sheet side was irradiated with a UV ray by means of a high pressure mercury lamp to prepare a protective sheet for a coating layer. The dosage was 300 mJ/cm² (365 nm).

### Example 2

A protective sheet for a coating layer was prepared in the same manner as in Example 1, except that used were 100 parts by mass of a butyl acrylate-methyl acrylate (mole ratio: 9/1) copolymer [the component (A), a weight average molecular weight: 600,000] and 5 parts by mass of urethane acrylate [the component (B), trade name: Shiko UV-1400B, weight average molecular weight: less than 5,000, manufactured by Nippon Synthetic Chemical Industry Co., Ltd.].

### Example 3

A protective sheet for a coating layer was prepared in the same manner as in Example 1, except that used as the component (B) was 5 parts by mass of a urethane acrylate (trade name: Shiko UV-1700B, a weight average molecular weight: less than 5,000, manufactured by Nippon Synthetic Chemical Industry Co., Ltd.).

### Example 4

The same substrate sheet and release sheet as described in Example 1 were used, and the following pressure-sensitive adhesive was used.
Used as the pressure-sensitive adhesive was a composition comprising 100 parts by mass of a copolymer [the component (A), a weight average molecular weight: 600,000] of 90 parts by mass of 2-ethylhexyl acrylate and 10 parts by mass of methyl acrylate and 1 part by mass of trimethylolpropane triacrylate [the component (B)]. The above composition was dissolved in ethyl acetate to prepare a solution having a concentration of 35% by mass. Irgacure 184 (an acetophenone base polymerization initiator, manufactured by Ciba Specialty Chemicals K. K.) 1.5 part by mass was added as an initiator to the above solution, and then the solution was diluted with ethyl acetate to prepare a coating liquid having a solid matter concentration of 30% by mass.
The coating liquid having a solid matter concentration of 30% by mass described above was applied on a silicone base resin-coated surface of the release sheet described above by a knife coating method so that a thickness after drying was 30 µm, and then it was dried at 90°C for 3 minutes to form a layer which was a pressure-sensitive adhesive layer on the release sheet. Subsequently, the release sheet was stuck together with the substrate sheet described above, and then the release sheet side was irradiated with a UV ray by means of a high pressure mercury lamp to prepare a protective sheet for a coating layer. The dosage was 300 mJ/cm² (365 nm).

### Comparative Example 1

A polyethylene film (trade name: PE Wadatoumei 50ASKAI4, manufactured by J-Film Corporation) having a thickness of 50 µm which contains an antistatic agent was used as a substrate sheet for the protective sheet, and a polyethylene terephthalate film (SP-PET3801, manufactured by Lintec Corporation) having a thickness of 38 µm which was coated with a silicone resin was used as a release sheet.
A solution prepared by mixing 100 parts by mass of an acrylic-based pressure-sensitive adhesive obtained by diluting a butyl acrylate-acrylic acid copolymer (butyl acrylate/acrylic acid mole ratio: 10/1) having a weight average molecular weight of 600,000 to 30% by mass with ethyl acetate and 5 parts by mass of a 5% by mass ethyl acetate solution of 1,3-bis(N,N-diglycidylaminomethyl)cyclohexane as a cross-linking agent was used as a composition which was a pressure-sensitive adhesive. The above solution was applied on a silicone resin-coated surface of the release sheet described above by a knife coating method so that a thickness after drying was 20 µm and dried at 90°C for 3 minutes, and then the release sheet was stuck together with the substrate sheet described above to prepare a protective sheet for comparison.

### Comparative Example 2

A protective sheet for comparison was prepared in the same manner as in Comparative Example 1, except that used as a pressure-sensitive adhesive was a solution obtained by diluting a rubber base pressure-sensitive adhesive comprising polyisobutylene having a viscosity average molecular weight of 800,000 to 30% by mass with toluene and that the cross-linking agent was not used.

### <Evaluated items and methods for evaluating>

A double liquid type polyurethane-based top coating material for automobiles (prepared by mixing 100 parts by mass of Rock Multi Top Clear SF-150-5120 with 50 parts by mass of Rock Multi Top Clear S curing agent standard 150-5150 each manufactured by Rock Paint Co., Ltd.) was sprayed in a thickness of about 1 µm on a plate of a polyolefin base thermosetting elastomer on which an electrodepositing primer and an intermediate coating material were applied. It was dried at 60°C for 10 minutes and left standing at room temperatures for 30 minutes, and then the respective protective sheets obtained in the examples and the comparative examples which were cut into a tape shape were superposed on the coating layer. The sheets of a tape shape which were superposed on the coated surfaces with wrincles were left standing at room temperature for 24 hours and then peeled, and the states of the coating layers were visually observed to evaluate the respective characteristics according to the following criteria.
(1) Stepping of a wrinkle part
   ○: Step can not be confirmed.
   △: Step can be confirmed, and a vertical interval of stepping is 0.3 to 1 µm.
   ×: Step can be confirmed, and a vertical interval of stepping is 1 µm or more
(2) Boundary between a sheet-superposed part and a none-superposed part
   ○: Boundary can not be confirmed.
   △: Boundary can slightly be confirmed.
   ×: Boundary can clearly be confirmed.
(3) Whitening of an adhesive contact surface
   ○: Whitening can not be confirmed.
   △: Whitening can be confirmed but can not be confirmed after left standing outdoors for one week
   ×: Whitening can be confirmed and can be still confirmed even after left standing outdoors for one week
(4) Adhesive deposit
   ○: Adhesive deposit can not be confirmed on the coated surface.
   △: Adhesive deposit can slightly be confirmed on the coated surface.
   ×: Adhesive deposit can notably be confirmed on the coated surface.

**Table 1**

| | Examples | | | | Comparative Examples | |
|---|---|---|---|---|---|---|
| | 1 | 2 | 3 | 4 | 1 | 2 |
| Stepping of wrinkle part | ○ | ○ | ○ | ○ | × | △ |
| Boundary between sheet-superposed part and none-superposed part | ○ | ○ | ○ | ○ | × | △ |
| Whitening of adhesive contact surface | ○ | ○ | ○ | ○ | × | △ |
| Adhesive deposit | ○ | ○ | ○ | ○ | × | △ |

As apparent from the results shown in Table 1, it can be found that the protective sheets for a coating layer according to the present invention obtained in the examples are excellent in all characteristics as compared with those of the protective sheets obtained in the comparative examples.

### INDUSTRIAL APPLICABILITY

The protective sheet for a coating layer according to the present invention is a protective sheet capable of being applied as well particularly to a coating layer of a urethane-based coating material which is insufficiently cured, and it is particularly useful as a protective sheet for coated plastic-made parts such as bumpers and the like.

## Claims

1. A protective sheet for a coating layer comprising a substrate sheet having a pressure-sensitive adhesive layer, wherein the pressure-sensitive adhesive layer is obtained by cross-linking of a layer through irradiating with an active energy beam, and the layer comprises a composition containing a component (A) an acrylic-based homopolymer or copolymer containing at least one selected from butyl(meth)acrylate, 2-ethylhexyl(meth)acrylate and isooctyl(meth)acrylate as a monomer component and containing no active hydrogens and a component (B) a multifunctional (meth)acrylate monomer or oligomer.

2. The protective sheet as claimed in claim 1, wherein the multifunctional (meth)acrylate monomer is a monomer having a molecular weight of less than 1000.

3. The protective sheet as claimed in claim 1, wherein the multifunctional (meth)acrylate oligomer is at least one selected from a urethane(meth)acrylate oligomer, a polyester(meth)acrylate oligomer, an epoxy(meth)acrylate oligomer, a polyether(meth)acrylate oligomer, a polybutadiene(meth)acrylate oligomer and a silicone(meth)acrylate oligomer.

4. The protective sheet as claimed in claim 3, wherein the multifunctional (meth)acrylate oligomer is a urethane (meth)acrylate oligomer.

5. The protective sheet as claimed in any one of claims 1 to 4, wherein the acrylic-based homopolymer or copolymer described above is a homopolymer of butyl acrylate.

6. The protective sheet as claimed in any one of claims 1 to 4, wherein the acrylic-based homopolymer or copolymer described above is a n-butyl acrylate-methyl acrylate copolymer.

7. The protective sheet as claimed in any one of claims 1 to 4, wherein it is a protective sheet for a coating layer which is applied on automobiles.

8. The protective sheet as claimed in any one of claims 1 to 4, wherein it is a protective sheet for a urethane-based coating layer which is applied on resin-made bumpers.
